# EUROPEAN PATENT APPLICATION

(11) **EP 0 902 415 A1**
(43) Date of publication of application: **17.03.1999**
(21) Application number: 97202815.3
(22) Date of filing: 15.09.1997
(51) Int. Cl.: G10L 5/06

(54) **Method of and arrangement for providing improved speaker reference data and speaker verification**

(71) Applicant: Koninklijke KPN N.V., 9726 AE Groningen (NL)
(72) Inventor: Den Os, Elisabeth Anna, 2509 CH Den Haag (NL); Boves, Lodewijk Willem Johan, 6521 ME Nijmegen (NL)
(74) Representative: Dohmen, Johannes Maria Gerardus

(57) **Abstract**

A method of and an arrangement for obtaining reference information comprising speech parameter data and variability data from test or enrollment speech (2) of an individual. Classes of speakers are defined, each class comprising speech parameter data and variability data of said speech parameter data, obtained from speech of a plurality of speakers. Speech parameter data (3) of the test or enrollment speech (2) are obtained and variability data are allocated to the speech parameter data in accordance with variability data of the class of speakers assigned to the individual. The speech parameter data (3) and allocated variability data comprise the above reference information (5). With the reference information (5) thus obtained an improved method and arrangement for speaker verification is provided.

## Description

### Field of the Invention

The present invention relates generally to speaker verification and, more specifically, to a method of and an arrangement for obtaining reference data from test speech of an individual and a method of and an arrangement for verifying the claimed identity of a speaker based on speech input and reference data obtained.

### Background of the Invention

Speaker Verification (SV) is a well known technique to identify whether a speaker is the claimed individual. Speaker verification is an authentication process on the basis of characterising features of a person's voice and is used in applications such as telephone banking, access control (e.g. to secure building access), credit card transactions etc.

In general, reference information or reference data are obtained from the voice of a person and stored in memory means. By comparing the stored reference information with similar information obtained from speech input of a claimant, i.e. a person who claims to be a particular individual, a decision is made as to the identity of the unknown speaker. The reference information is usually obtained in an enrollment session.

International patent application WO 95/05656 discloses a speaker verification system wherein a verification decision is made based on a plurality of separate algorithms in parallel, using a neural network. Reference data is obtained by requiring a person to repeat words in a limited vocabulary a number of times. This test speech is than converted to characteristic acoustic features, which are stored and used for comparision with speech input in order to verify whether a claimant is the person he or she claims to be.

Both, the reference information and the verification procedure are probalistic in nature. Even if a voice would always sound the same, which is not the case due to changes in the emotional and health condition of a speaker, for example, in practice the speech input obtained will be corrupted by background noise, distortions caused by the recording equipment such as a microphone and, if applicable, distortions at the transmission path from the speaker to the verification equipment. Distortions of this type are significant in case of transactions conducted over a telephone line, both wired and wireless.

Further, a speaker may tend to pronounce a word differently, for example more slowly, with more or less energy resulting in changes of the values of all parameters by which the speech signal can be characterised, including its spectrum, pitch periods, etc.

It will be appreciated that, in order to enhance the reliability of the verification procedure, besides the characteristic speech parameter data also variability data of the speech parameters of an individual are required, covering all such changes. However, in practice, this would require a very complex enrollment procedure for obtaining test speech which, in applications for the protection of telematics services, for example, is not feasible.

### Summary of the Invention

It is an object of the present invention to provide reference information comprising speech parameter and variability data characteristic of an individual from a short and simple enrollment procedure.

It is a further object of the present invention to provide improved speaker verification based on speech parameter data obtained from speech input of a speaker and the improved reference information.

According to a first aspect of the present invention, there is provided a method of obtaining reference information from test speech of an individual, this reference information comprising speech parameter data and variability data, comprising the steps of:
- defining classes of speakers, each class comprising speech parameter data and variability data of said speech parameter data obtained from speech of a plurality of speakers,
- classifying the individual in a class of speakers,
- obtaining speech parameter data of the test speech of the individual, and
- allocating variability data to the speech parameter data of the test speech in accordance with the variability data of the class of speakers, the test speech parameter data and allocated variability data comprising the reference information.

The invention is based on the insight that reliable variability data of characteristic speech parameters can be obtained by classifying a speaker into a particular class of speakers, and allocating variability data to speech parameter data obtained from test speech of an individual in accordance with the variability data of speech parameters of the class of speakers assigned to the individual. The speech parameter data and variability data of each class are obtained from speech of a plurality of different speakers comprising such class.

It will be appreciated that the variability data thus obtained will cover nearly all changes in the speech parameters due to emotional, health, data transmission and other influences which may cause differences in the speech received of an individual.

It is noted that the speech parameter data obtained are unique for the individual however, at least part of the variability data is common to the speakers in a class of speakers. The manner of allocating variability data to particular speech parameter data may vary from class to class and, of course, from parameter to parameter.

Eventually, with the above method according to the present invention, reference information from relatively little test speech of an individual is obtained, comprising characterising speech parameter data and allocated variability data.

According to the invention, it is sufficient to obtain speech parameter data from a single enrollment session of an individual, in order to assign the applicable variability data.

In a further embodiment of the method according to the invention, also variability data are obtained of the speech parameter data of the test or enrollment speech.

By comparing the variability data thus obtained with the variability data of the class of speakers in which the individual is classified, either or both the variability data obtained or the corresponding variability data of the class of speakers can be allocated to the speech parameter data comprising the reference information. This, to assure that the variability data allocated to the speech parameter data are within a certain range and/or upper and lower limit.

In a preferred embodiment of the method according to the invention the speech parameter data comprise estimates of the central tendency values of speech parameters and the variability data comprise estimates of the variance values of these parameters.

For authentication purposes, in a further embodiment of the method according to the invention, the reference information obtained is stored in relation to data identifying an individual, such as a code number, the name of the individual, etc. This identifying data can be provided both orally and/or electronically, e.g. by input from a keyboard, a data card or from any other suitable method known in the art.

In a second aspect, the invention provides a method of verification whether a speaker is the claimed individual, based on speech input and stored information including reference information, comprising the steps of:
- obtaining speech and identity data of the speaker,
- retrieving speech parameter data and variability data from the reference information pertaining to the identity data,
- obtaining speech parameter data of the speech of the speaker, and
- comparing the speech parameter data and pertaining reference information, resulting in a verification decision, wherein the reference information is obtained according to the method disclosed above.

Accordingly, a speaker who wishes to have his speech verified, will input speech which is then compared with stored reference speech and variability data of the individual the speaker claims to be. A verification decision is made whether or not the speaker is the claimed individual.

It is experimentally verified that using the reference information constructed according to the present invention, i.e. speech parameter data and allocated variance data, a significant increase in the reliability of the speaker verification process is provided. This, both as to variability caused by changes in the speakers voice and transmission distortions at the path from the speaker to the verification equipment which may involve wired or wireless telephone networks.

The impact of background noise and channel distortions on the speaker verification process can be diminished by comparing the likelihood scores for a claimant speaker with the likelihood scores obtained with corresponding reference models obtained by averaging the characteristics of one or more groups of speakers.

It goes without saying that the speech parameters and variance data used in the enrollment and verification procedure are the same for a given application.

In a preferred embodiment of the verification method according to the invention the speech parameter data comprise estimates of the central tendency values of speech parameters and the variability data comprise estimates of the variance values of these parameters. In the embodiment, coarse speech parameter values are obtained from the input speech while in the comparison step the likelihood is obtained whether these coarse values are within the allocated variance range of the central tendency values of the reference information of the claimant speaker.

The invention provides also an arrangement for obtaining reference information from test speech of an individual, comprising:
- first storage means, for storing speech parameter data and variability data obtained from speech of a plurality of speakers arranged in classes of speakers,
- means for obtaining test speech of an individual,
- means for classifying the individual in a class of speakers,
- means for obtaining speech parameter data of the test speech,
- means for allocating variability data of the first storage means to the speech parameter data obtained in accordance with the class of speakers, and
- second storage means for storing as the reference information the test speech parameter data and allocated variability data.

For verification purposes, the invention further provides an arrangement for verifying whether a speaker is the claimed individual, comprising:
- means for obtaining input speech and identity data of a speaker,
- means for retrieving reference information based on the identity data, the reference information comprising speech parameter data and variability data pertaining to the identity data,
- means for obtaining speech parameter data of the input speech, and
- means for comparing the speech parameter data obtained of the input speech and the pertaining reference information resulting in a verification decision, wherein the verification means are arranged for retrieving reference information obtained from speech of a plurality of speakers.

Those skilled in the art will appreciate that the processing of the test or enrollment speech, the input speech and the speech data obtained from the plurality of speakers can be completely handled in the digital domain.

The above-mentioned and other features and advantages of the invention are illustrated in the following description with reference to the enclosed drawings.

### Brief Description of the Drawings

Figure 1 illustrates a general block diagram of obtaining reference information from test speech of an individual, according to the present invention.
Figure 2 illustrates a general block diagram of speech verification whether a speaker is the claimed individual, based on reference information according to the present invention.

### Detailled Description of the Embodiments

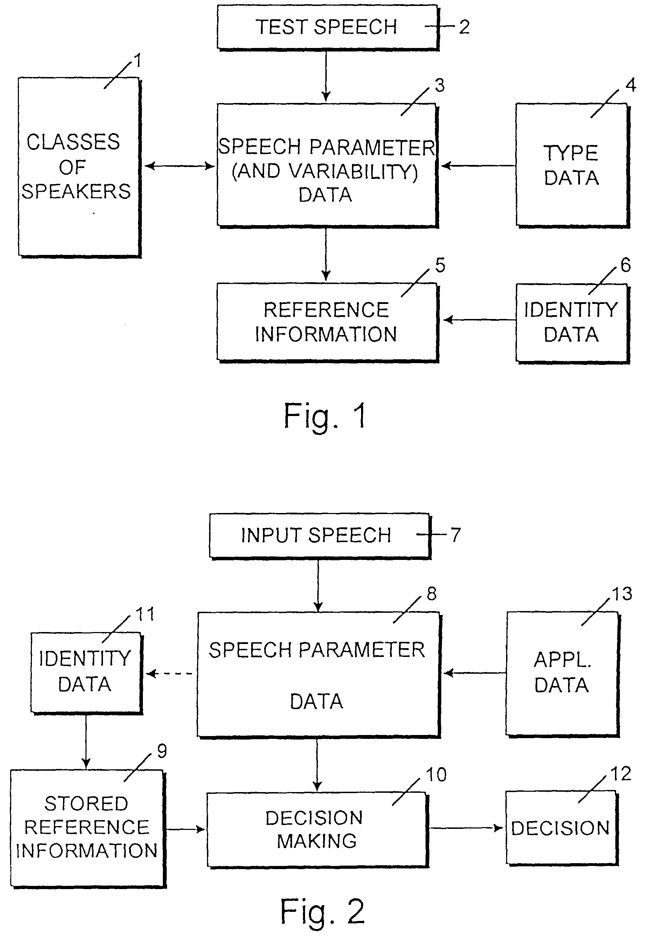

The invention may be described in functional terms, with reference to figures 1 and 2.

In the general block diagram illustrated in figure 1, block 1 represents classes of speakers, each class comprises speech parameter and variability data obtained from speech of a plurality of speakers.

Differentiation as to the class to which a speaker belongs can be based on whether the individual is male or female, the type of medium through which the speech of an individual is obtained, the region of the country where he/she went to school, and combinations of such and other characteristics.

These data may be obtained, for example, from a subscription form or other information folder, from an interview or directly from the test speech of the individual, as well as combinations thereof. Alternatively, the classes of speakers are formed by means of statistical clustering techniques.

Block 2 represents speech provided by an individual in an enrollment session. The content of the enrollment speech can be application dependent. In applications wherein a speaker is identified from digits 0-9, for example, the test speech normally does not have to contain other information than spoken digits. Likewise, in speech verification based on a limited vocabulary, the enrollment speech normally does not have to comprise other words than contained in such vocabulary. Preferably, no strict requirements are set upon the content of the enrollment or test speech.

The enrollment speech may also contain several repetitions of predetermined words, phrases etc. whether or not controlled by the speech parameter data block 3.

In the speech parameter block 3 speech parameter data are obtained from the enrollment speech 2 during the enrollment session.

Suitable speech parameters for the purpose of the present invention include one or more of:
- Energy
- Linear Prediction Co-efficients
- Cepstral co-efficients.

Methods for deriving such speech parameter data are known in the art, and need not be described in detail. Reference is made to L. Rabiner & R. Shafer, "Digital processing of speech signals", Englewood Cliffs: Prentice Hall, 1978.

To the speech parameter data thus obtained, variability data are allocated, retrieved from the classes of speakers 1 under the control of type block 4.

Type block 4 represents information as to the type of class of speakers to which the individual under enrollment has to be assigned. This type information can be extracted from information separately provided by the individual and relating to the type of classes as disclosed above.

Alternatively, the enrollment speech can be used to assign a class of speakers to the individual under enrollment. The speech parameters obtained in the enrollment session are matched against the reference information of all classes of speakers in the same way as making a verification decision.

Suitable algorithms for processing the speech parameter data 3 in order to retrieve information as to the type of class of a speaker from the test speech 2 may include:
- Vector Quantisation (VQ)
- Recurrent Neural Network (RNN)
- Long Term Features (LTF).

VQ is a technique wherein the closeness to a class of speakers is based on averaging of data obtained from the enrollment speech, which average is used for mapping the data obtained to a particular class of speakers.

RNN is a type of artificial intelligence system able to "learn" by receiving inputs. By repeatedly presenting examples of enrollment speech, a class of speakers can be associatively selected.

LTF is a technique applied for text-independent speaker recognition and finds the average and variance of each speech parameter over the duration of a speakers utterance.

In case the relevant class of speakers is based on the enrollment speech 2, the type block 4 can be omitted.

The speech parameter data obtained from the enrollment speech 2 and the relevant variability data obtained from the classes of speakers block 1 are stored in reference information block 5.

In the case of multiple individuals, the reference information is stored in relation to data identifying the individual provided by identity data block 6. The identity data 6 may comprise the name of the individual, whether or not in coded form, or any other identifying data.

In a preferred embodiment of the invention, the speech parameter data 3 extracted from the enrollment speech 2 and the speech parameter data of the classes of speakers 1 comprise estimates of the central tendency values of a set of speech parameters and the variability data comprise estimates of the variance values of the set of parameters. De estimates of the central tendency values are based upon modelling the distribution of parameter values by summing normal distributions of a particular parameter.

In a further embodiment of the invention, next to the extraction of values of speech parameters of the enrollment speech 2, in block 3 also variability data can be obtained from the enrollment speech 2. By comparing such variability data and the corresponding variability data of the class of speakers assigned to the individual, a decision can be made whether the variability data obtained from the enrollment speech and/or the variability data of the classes of speakers can be allocated to the reference information 5. By doing so, it can be guaranteed that the variability data of the reference information 5 is within a certain range or upper and/or lower boundaries. For example, variance data from the class of speakers are assigned if the estimated variance values obtained from the enrollment speech are less than the values of the corresponding variance data in the class of speakers. Whenever the estimates of the variance values obtained from the enrollment speech are larger than the corresponding value in the class of speakers, the estimates obtained from the enrollment speech are allocated to the reference information 5.

In an alternative embodiment, the assignment of variability data, such as the variance data, is based on an interpolation between the data estimated from the enrollment speech and the data retrieved from the class of speakers.

Assignment of variance data to the speech parameter data can be dependent on the particular values of the speech parameters, as well as other information relevant to the relationship between variability values and values of speech parameters.

It has been found that reliable reference information can be obtained from relatively little speech in a single enrollment session, which makes the present invention particularly suitable for enrollment over communication networks, such as public or private wired and/or wireless telephone networks and telematic services.

In a practical embodiment, the classes of speakers data 1 are obtained from recordings of over 5000 speakers, such that within each class sufficient speech is available to obtain speech parameter data, e.g. mean values of speech parameters, and to provide reliable estimates of the variability values of the speech parameter values.

In a specific embodiment, the classes of speakers are based on data about sex and regions of origin of the speakers. In another embodiment the classes are based on a cluster analyses. In a yet another specific embodiment, the classes are based on the sex of the speaker, while the data in each class are derived from equal numbers of speakers from each relevant region of the country.

Referring to figure 2, there is shown Speech Verification (SV) based on the reference information obtained during an enrollment session as disclosed above in connection with figure 1.

In use, input speech of a speaker is obtained, i.e. block 7. The input speech is processed in a processing block 8 wherein speech parameters are obtained. The speech parameters include one or all of the speech parameters obtained during the enrollment session, i.e. block 3 of figure 1.

Once an identity claim is made by the speaker, i.e. identity data block 11, the speech parameter data 8 obtained are compared with stored reference information 9, which is the same or a selection of the reference information 5. Comparison of the speech parameter data 8 and the reference information 9 is performed in decision making block 10, resulting in a verification decision 12. The type of decision is in general application dependent.

Identity data 11 may be retrieved separate from the input speech 7, e.g. from an identity card or by data input from a keyboard such as the name of the claimed individual. However, it is also feasible to derive the claimed identity data from the input speech 7, which is indicated by a dotted arrow between blocks 8 and 11 in figure 2, e.g. a spoken name.

The type of speech parameters obtained from the input speech 7 may be application dependent, as indicated by application data block 13.

In a preferred embodiment, estimates of the central tendency of speech parameter values are obtained from the input speech while the variability data comprise estimates of the variances values of these parameters. In most practical applications, it sufficies to obtain only speech parameter data in block 8 and to compare the thus obtained speech parameter data with the stored speech parameter data of the claimed individual, thereby using the variability data stored for providing the decision 12.

The input speech 7 may be obtained from standard text selected from a list, such that the user is prompted by the system to pronounce the selected text. It is also feasible to obtain free text from the speaker, which is analysed in speech parameter data block 8.

Suitable decision making algorithms processed in decision making block 10 are the above mentioned VQ, RNN and LTF, for example.

Those skilled in the art will appreciate that the processes described above and illustrated in figures 1 and 2 can be implemented in suitable equipment comprising digital building blocks, such as A/D-converters, memory means, processing means for obtaining the speech parameter and variability data, the execution of decision making algorithms etc. Such building blocks are known per se and need not further disclosed herein.

It has been experimentally verified that the present invention provides a significant improvement in SV systems.

In the foregoing, embodiments of the invention have been disclosed which, however, may not be construed in that the invention is limited to these embodiments. Several modifications can be made by those skilled in the art without departing from the scope of the invention defined in the appended claims.

## Claims

1. A method of obtaining reference information from test speech of an individual, said reference information comprising speech parameter data and variability data, comprising the steps of:
- defining classes of speakers, each class comprising speech parameter data and variability data of said speech parameter data obtained from speech of a plurality of speakers,
- classifying said individual in a class of speakers,
- obtaining speech parameter data of said test speech of said individual, and
- allocating variability data to said speech parameter data of said test speech in accordance with said variability data of said class of speakers, said test speech parameter data and allocated variability data comprising said reference information.

2. A method according to claim 1, wherein said test speech of said individual is obtained in a single enrollment session.

3. A method according to the previous claims, wherein variability data are obtained of said speech parameter of said test speech.

4. A method according to any of the previous claims, wherein said speech parameter data comprise estimates of the central tendency values of speech parameters and said variability data comprise estimates of the variance values of said parameters.

5. A method according to any of the previous claims, wherein said speech parameters include one or more of the following:
- Energy
- Lineair Prediction Co-efficients
- Cepstral co-efficients.

6. A method according to any of the previous claims, wherein said classes of speakers include one or more of the following:
- Male
- Female
- Region of origin
- Transmission medium.

7. A method according to claim 6, wherein a speaker is classified in a class of speakers using an algorithm processing said speech parameter data obtained from said test speech.

8. A method according to claim 7, wherein said algorithm includes one or more of the following:
- Vector Quantisation (VQ)
- Recurrent Neural Network (RNN)
- Long Term Features (LTF).

9. A method according to any of the previous claims, wherein a speaker is classified in a class of speakers using separately provided information.

10. A method according to any of the previous claims, wherein said reference information is stored in relation to data identifying said individual.

11. A method of verification whether a speaker is the claimed individual, based on speech input and stored information including reference information, comprising the steps of
- obtaining speech and identity data of said speaker,
- retrieving speech parameter data and variability data from said reference information pertaining to said identity data,
- obtaining speech parameter data of said speech of said speaker, and
- comparing said speech parameter data and pertaining reference information, resulting in a verification decision, wherein said reference information is obtained according to a method of any of the claims 1-10.

12. A method according to claim 11, wherein said identity data are obtained from said speech input.

13. A method according to any of the claims 11, 12, wherein said identity data are separately provided.

14. A method according to any of the claims 11, 12, 13, wherein said speech parameters obtained from said speech input include one or more of the following:
- Energy
- Lineair Prediction Co-efficients
- Cepstral co-efficients, and
wherein said comparision is based on an algorithm including one or more of the following:
- Vector Quantisation (VQ)
- Recurrent Neural Network (RNN)
- Long Term Features (LTF).

15. A method according to any of the claims 11, 12, 13, 14, wherein said speech parameter data comprise estimates of the central tendency values of speech parameters and said variability data comprise estimates of the variance values of said parameters.

16. An arrangement for providing reference information from test speech of an individual, comprising:
- first storage means, for storing speech parameter data and variability data obtained from speech of a plurality of speakers arranged in classes of speakers,
- means for obtaining test speech of an individual,
- means for classifying said individual in a class of speakers,
- means for obtaining speech parameter data of said test speech,
- means for allocating variability data of said first storage means to said speech parameter data obtained in accordance with said class of speakers, and
- second storage means for storing as said reference information said test speech parameter and allocated variability data.

17. An arrangement according to claim 16, further comprising means for storing said reference information in relation to data identifying said individual.

18. An arrangement for verifying whether a speaker is the claimed individual, comprising:
- means for obtaining input speech and identity data of said speaker,
- means for retrieving reference information based on said identity data, said reference information comprising speech parameter data and variability data pertaining to said identity data,
- means for obtaining speech parameter data of said input speech, and
- means for comparing said speech parameter data obtained of said input speech and said pertaining reference information resulting in a verification decision, wherein said verification means are arranged for retrieving reference information obtained from speech of a plurality of speakers.

19. An arrangement according to claim 18, further comprising storage means arranged for storing said reference information in relation to data identifying an individual.
